# EUROPÄISCHE PATENTSCHRIFT

(11) **EP 0 620 389 B1**
(45) Veröffentlichungstag und Bekanntmachung des Hinweises auf die Patenterteilung: **18.06.1997**
(21) Anmeldenummer: 94104072.7
(22) Anmeldetag: 16.03.1994
(51) Int. Cl.: F16J 3/04, F16J 15/36

(54) **Balg aus einem rohrförmigen elastischen Material**
Bellow made of a tubular, elastic material
Soufflet formé d'un matériau élastique et tubulaire

(30) Priorität: 06.04.1993 DE 9305264 U
(43) Veröffentlichungstag der Anmeldung: 19.10.1994
(73) Patentinhaber: FEODOR BURGMANN DICHTUNGSWERKE GmbH & Co., D-82515 Wolfratshausen (DE)
(72) Erfinder: Woppowa, Robert, D-82515 Wolfratshausen (DE); Findler, Ludwig, Dipl.-Ing., D-82515 Wolfratshausen (DE)
(74) Vertreter: Schmidt, Horst, Dr.

(56) Entgegenhaltungen:
- DE-A- 2 933 695

## Beschreibung

Die Erfindung betrifft einen Balg aus einem rohrförmigen elastischen Material mit einer im wesentlichen wellen- oder faltenartigen Querschnittskonfiguration längs wenigstens eines Abschnittes seiner axialen Länge.

Gummibalge werden z.B. bei Gleitringdichtungen als Träger des mit einer Welle rotierenden Gleitringes eingesetzt und können demzufolge drehfest mit der Welle verbunden werden. Derartige Balge besitzen einen zwischenliegenden Abschnitt mit annähernd wellen- oder faltenartiger Querschnittskonfiguration sowie endseitige Montageabschnitte, von denen einer zur Aufnahme des Gleitringes und der anderen zur Positionierung des Balges auf der Welle dient. An den Montageabschnitten sind ferner Widerlager für eine sich zwischen den endseitigen Montageabschnitten erstreckende Vorspannfeder befestigt. Es wurde festgestellt, dass unter den Umgebungsbedingungen, unter denen derartige Gleitringdichtungen eingesetzt werden, häufig Bereiche des wellen- oder faltenartigen Balgabschnittes in Berührung miteinander treten und dabei die Gefahr besteht, dass diese Bereiche dauerhaft aneinander haften bleiben, so dass die axiale federnde Nachgiebigkeit des Balges verlorengeht oder eingeschränkt wird. Auch ist ein unerwünschtes Anhaften von Bereichen des Balges möglich, die mit benachbarten Bauteilen, z.B. der Welle in Berührung kommen, wodurch ebenfalls die federnde Nachgiebigkeit eingeschränkt werden kann. Diese Gefahr besteht insbesondere bei höheren auf den Balg wirkenden Drücken und Temperaturen. Es wurde daher schon vorgeschlagen, die gefährdeten Bereiche des Balges mit einer Beschichtung aus einem antiadhäsiven Material, wie PTFE, zu versehen. Abgesehen davon, dass das Aufbringen dieser Beschichtungen verteuernde zusätzliche Arbeitsschritte und eine Belastung der Umwelt bedeutet, kann nicht ausgeschlossen werden, dass sich die Beschichtungen ungünstig auf die Eigenschaften des Gummi- oder Elastomermateriales des Balges auswirken. Darüber hinaus bestehen häufig Haftungsprobleme zwischen dem Balgmaterial und der Beschichtung.

Aus der Druckschrift DE-A 29 33 695 ist ein Rollbalg zur Abdichtung von Drehkupplungen bekannt, der aus zwei in radialer Richtung äußeren und inneren Ringen und aus einem dazwischen liegenden Rollelement besteht. Zum Schutz der Dichtung wurde in der DE-A vorgeschlagen, Distanzelemente an den Ringen anzubringen, die bei größeren Beugungswinkeln eine Zwangssteuerung des äußeren Ringes durch den inneren Ring bewirken sollen. Aufgrund ihrer Anordnung können diese Distanzelemente ein Anhaften von Teilbereichen der Oberfläche des Balgelements nicht verhindern.

Aufgabe der Erfindung ist daher die Schaffung eines Balges der gattungsgemässen Art, bei dem das erwähnte Anhaften von Balgbereichen untereinander oder mit benachbarten Bauteilen ohne antiadhäsive Beschichtungen vermieden werden kann.

Die Aufgabe wird erfindungsgemäss gelöst durch eine aus abwechselnden erhabenen und vertieften Bereichen gebildete Strukturierung an wenigstens einem der beim Einsatz des Balges in Berührung mit sich selbst oder mit benachbarten Bauteilen bringbaren Oberflächenbereiche des wellen- oder faltenartigen Abschnittes des Balges. Die Oberflächenstrukturierung, bei der es sich gemäss einer bevorzugten Weiterbildung der Erfindung um ein Raster aus noppenartigen Erhebungen handeln kann, bewirkt, dass anstelle einer flächenmässigen eine nur lokal begrenzte bzw. punktförmige Eingriffnahme der massgeblichen Balgbereiche stattfinden kann, d.h. stets Stellen verbleiben, die in Abstand von gegenüberliegenden Wandbereichen gehalten sind. Es wurde festgestellt, dass mit dieser einfachen Massnahme in überraschend zuverlässiger Weise ein Anhaften der betreffenden Balgbereiche vermieden werden kann, ohne dass antiadhäsive Beschichtungen zur Anwendung kommen müssen. Die Oberflächenstrukturierung kann bei der maschinellen Formung des Balges vorgesehen werden, so dass keine oder nur geringe Mehrkosten gegenüber einem Balg ohne eine derartige Oberflächenstrukturierung entstehen. Wegen der Vermeidung von antiadhäsiven Oberflächenbeschichtungen können die durch solche Beschichtungen häufig hervorgerufenen Auswirkungen auf das Material des Balges vermieden werden, so dass Balge mit einer erfindungsgemässen Oberflächenstrukturierung eine höhere Lebensdauer erwarten lassen. Im übrigen wird bezüglich anderer Weiterbildungen der Erfindung auf die Ansprüche verwiesen.

Die Erfindung wird nachfolgend anhand einer Ausführungsform und der Zeichnung näher erläutert. Es zeigen:
Fig. 1 in längsgeschnittener fragmentarischer Ansicht eine Gleitringdichtung mit einem Balg als Träger eines Gleitringes gemäss einer Ausführungsform der Erfindung,
Fig. 2 Darstellung eines Noppenrasters in vergrössertem Masstab des in Fig. 1 gezeigten Balges.

Obschon die Erfindung nachfolgend in Verbindung mit einem Balg als Gleitringträger einer Gleitringdichtung beschrieben wird, versteht es sich, dass die Erfindung auf diese Anwendung nicht beschränkt ist, sondern grundsätzlich immer dann vorteilhaft angewendet werden kann, wenn ein Anhaften von Bereichen eines Balges mit anderen Balgbereichen oder benachbarten Bauteilen vermieden werden soll.

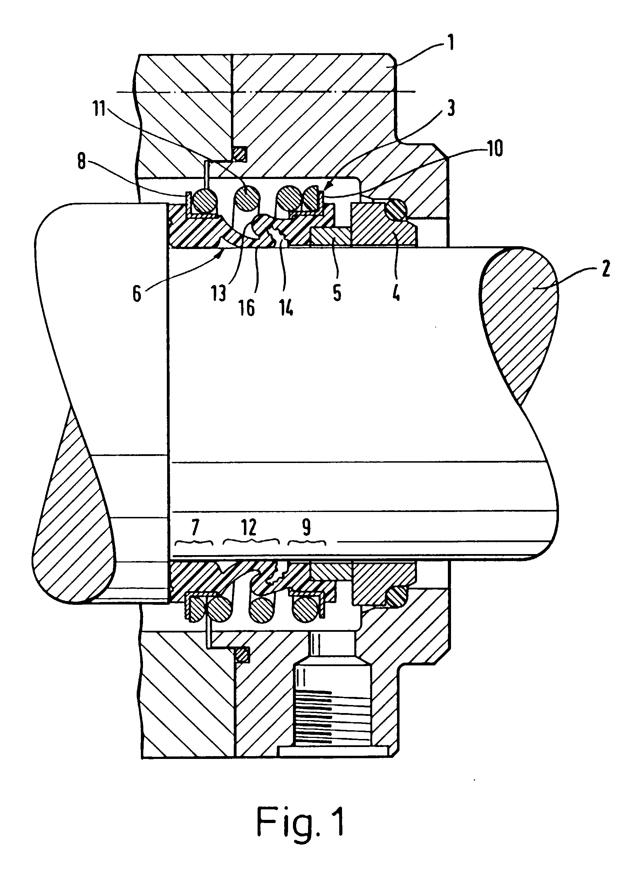

In Fig. 1 ist mit dem allgemeinen Bezugszeichen 3 eine Gleitringdichtung grundsätzlich bekannter Bauart bezeichnet.

Die Gleitringrichtung 3 umfasst einen gegenüber einem Gehäuse 1 abgedichteten, stationären Gleitring 4 und einen damit zusammenwirkenden rotierenden Gleitring 5, der mittels eines das allgemeine Bezugszeichen 6 tragenden Balges aus einem Gummi- oder Elastomermaterial drehfest mit einer Welle 2 verbunden ist.

Der Balg 6 setzt sich grundsätzlich aus drei longitudinalen Abschnitten zusammen, nämlich einem ersten endseitigen Montageabschnitt 7, mittels dem der Balg 6 an der Welle 2 befestigt ist, einem zwischenliegenden wellen- oder faltenartigen Abschnitt 12 und einem zweiten endseitigen Montageabschnitt 9, an dem der Gleitring 5 gehalten ist. Die endseitigen Montageabschnitte 7 und 9 tragen aussenumfänglich Widerlager 8, 10, zwischen denen eine Vorspannfeder 11 abgestützt ist, um den Gleitring 5 gegen den Gleitring 4 mit einer geeigneten Vorspannkraft zu drücken. Bezüglich weiterer Details zum grundsätzlichen Aufbau einer derartigen Gleitringdichtung kann auf die Burgmann-Konstruktionsmappe 14, S. 34-35 verwiesen werden.

Wie in der Zeichnung dargestellt, kann der zwischenliegende Abschnitt 12 des Balges 6 unter den Einbau- und/oder Betriebsbedingungen der Gleitringdichtung bereichsweise in einen schlaufenartig gefalteten Teilabschnitt 13 mit einer inneren Oberfläche 14 verformt sein, bei der aufgrund der Uförmigen Faltung die Gefahr besteht, dass gegenüberliegende Bereiche der inneren Oberfläche 14 in Eingriff miteinander treten und es leicht zu einem dauerhaften Anhaften dieser Bereiche kommen kann.

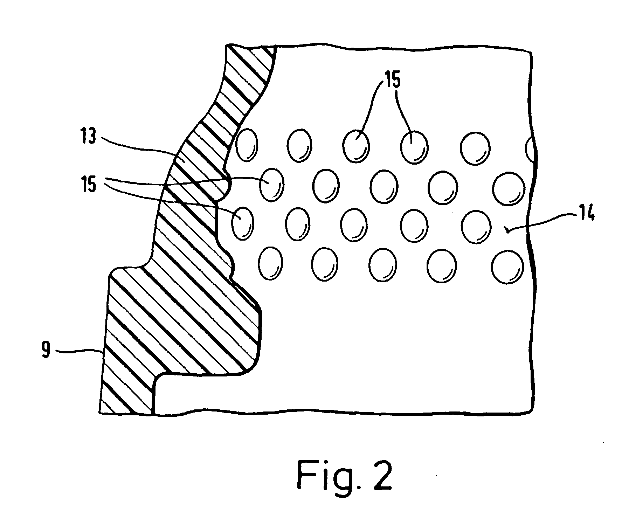

Erfindungsgemäss ist zur Vermeidung eines solchen Anhaftens längs der inneren Oberfläche 14 des schlaufenartig gefalteten Teilabschnittes 13 ein Raster aus einer Vielzahl von noppen- oder punktförmigen Erhebungen 15 vorgesehen, wie dies in Fig. 2 mit näheren Details dargestellt ist. Die Noppen 15 stehen von der inneren Oberfläche 14 des schlaufenartig gefalteten Teilabschnittes 13 etwas nach innen ab und verhindern, dass zwischen den gegenüberliegenden Oberflächenbereichen des Teilabschnittes 13 eine flächenmässige Berührung stattfinden kann. Vielmehr schaffen die Noppen 15 stets einen gewissen Abstand zum gegenüberliegenden Flächenbereich, so dass selbst dann, wenn eine haftende Eingriffnahme zwischen einzelnen Noppen 15 und Stellen der gegenüberliegenden Oberfläche zustande kommen sollte, die zwischen den lokalen Haftstellen wirkenden Haftkräfte unter den Rückstellkräften des Balges und/oder der Vorspannfeder 11 ohne weiteres überwunden werden können.

Es versteht sich, dass anstelle eines Rasters von noppenartigen Erhebungen 15 auch eine andere geeignete Oberflächenstrukturierung, z.B. in Gestalt eines Netzes aus durchgehenden oder unterbrochenen Rippen oder dgl., vorgesehen werden kann.

Ferner kann eine derartige Oberflächenstrukturierung auch an weiteren Bereichen des zwischenliegenden Abschnittes 12 des Balges 6 z.B. an der inneren Umfangsoberfläche eines dem Montageabschnitt 7 zugewandten Teilabschnittes 16 vorgesehen werden, der bei Betrieb mit der Oberfläche der Welle 2 in Berührung treten kann. Die Oberflächenstrukturierung würde in diesem Fall wirksam ein Anhaften diese Balgabschnittes an der Welle 2 verhindern.

Die Oberflächenstrukturierung in Gestalt eines Rasters aus noppenförmigen Erhebungen oder anderen geeigneten geometrischen Folgen von erhabenen und zurückliegenden Bereichen kann ohne weiteres bei der Herstellung des Balges durch entsprechende Ausgestaltung des Formwerkzeuges ausgebildet werden. Derartige Massnahmen sind dem Fachmann bekannt und brauchen hier nicht näher erläutert zu werden.

Obschon die Erfindung grundsätzlich auf die Vermeidung von antiadhäsiven Beschichtungen an den gefährdeten Oberflächenbereichen des Balges gerichtet ist, sind Anwendungsfälle denkbar, bei denen es vorteilhaft sein kann, wenn zusätzlich die erfindungsgemässe Oberflächenstrukturierung in Verbindung mit einer antiadhäsiven Beschichtung, z.B. in Gestalt einer PTFE-Dispersion verwendet wird.

## Patentansprüche

1. Balg (6) aus einem rohrförmigen elastischen Material mit einer im wesentlichen wellen- oder faltenartigen Querschnittskonfiguration längs wenigstens eines Abschnittes (12) seiner axialen Länge, gekennzeichnet durch eine aus abwechselnden erhabenen und zurückliegenden Bereichen gebildete Strukturierung (15, 14) an wenigstens einem der beim Einsatz des Balges (6) in Berührung mit sich selbst oder mit benachbarten Bauteilen (2) bringbaren Oberflächenbereiche (13,16) des wellen- oder faltenartigen Balgabschnittes (12).

2. Balg nach Anspruch 1, dadurch gekennzeichnet, dass die Oberflächenstrukturierung ein Raster aus noppenförmigen Erhöhungen (15) umfasst.

3. Balg nach Anspruch 1 oder 2 zur Verwendung als Gleitringträger einer Gleitringdichtung (3), dadurch gekennzeichnet, dass die Oberflächenstrukturierung wenigstens an einem, dem Gleitring (5) benachbarten inneren Oberflächenbereich (13) des wellen- oder faltenartigen Abschnittes (12) vorgesehen ist.

4. Balg nach einem der vorhergehenden Ansprüche, dadurch gekennzeichnet, dass die Oberflächenstrukturierung zusätzlich mit einem antiadhäsiven Material beschichtet ist.

## Claims

1. A bellows (6) of a tubular elastic material having a substantially corrugated or folded cross-sectional configuration along at least a portion (12) of its axial length, characterized by a structure (14,15) consisting of alternating raised and recessed portions at at least one of the surface portions (13,16) of the corrugated or folded portion (12) of said bellows (6) in use of said bellows (6) coming into contact with each other or with adjacent components (2)

2. The bellows as set forth in claim 1, characterized in that said surface structure comprises a pattern of knob-like elevations (15).

3. The bellows as set forth in claim 1 or 2 for use as a seal ring carrier of a mechanical face seal (3), characterized in that said surface structure is provided on at least an inner surface portion (13) of said corrugated or folded portion (12) adjacent to said seal ring (15).

4. The bellows as set forth in any of the preceding claims, characterized in that said surface structure is additionally coated with an anti-adhesive material.

## Revendications

1. Soufflet (6) formé d'un matériau élastique en forme de tube présentant une configuration en coupe principalement ondulée ou plissée le long d'au moins une portion (12) de sa longueur axiale, caractérisé par une structure (15, 14) formée d'une alternance de zones en relief et en creux sur au moins une zone de la surface (13, 16) de la portion de soufflet ondulée ou plissée (12) pouvant être amenée, lors de l'utilisation du soufflet, en contact avec elle-même ou avec des pièces voisines (2).

2. Soufflet selon la revendication 1, caractérisé en ce que la structure superficielle comprend un réseau de bosses (15) en forme de boutons.

3. Soufflet selon la revendication 1 ou 2, destiné à être utilisé comme support d'anneau glissant d'une garniture d'étanchéité à anneau glissant (3), caractérisé en ce que la structure superficielle est prévue sur au moins une zone de surface intérieure (13) voisine de l'anneau glissant (5) de la portion ondulée ou plissée (12).

4. Soufflet selon l'une quelconque des revendications précédentes, caractérisé en ce que la structure superficielle est de plus revêtue d'un matériau anti-adhésif.
